Europäisches Patentamt

European Patent Office

Office européen des brevets

(11) Numéro de publication: **0 427 608 A1**

## (12) DEMANDE DE BREVET EUROPEEN

(21) Numéro de dépôt: 90403129.1

(22) Date de dépôt: 06.11.90

(51) Int. Cl.5: **B08B 3/12**, F04C 13/00, F04D 7/00

(30) Priorité: 06.11.89 FR 8914814

(43) Date de publication de la demande:
**15.05.91 Bulletin 91/20**

(84) Etats contractants désignés:
**BE CH DE ES FR GB GR IT LI NL**

(71) Demandeur: **Nerriere, Jean-Louis**
**La Libauderie**

F-44190 Getigne(FR)

(72) Inventeur: **Nerriere, Jean-Louis**
**La Libauderie**
**F-44190 Getigne(FR)**

(74) Mandataire: **Serin, Jean-Pierre et al**
**Cabinet PIERRE LOYER 77, rue Boissière**
**F-75116 Paris(FR)**

(54) **Dispositif destiné à empêcher le dépôt d'impuretés à l'intérieur d'appareils non accessibles directement.**

(57) Le dispositif est constitué d'un boîtier étanche (1) pouvant être appliqué de façon amovible contre la paroi de l'appareil (2) en épousant tout ou partie de sa forme. Il comporte au moins un élément vibreur (3), constitué par une pastille céramique à effet piézo-électrique et qui est relié à un oscillateur, lequel comporte des moyens d'excitation sélective de l'élément vibreur (3). et peut être situé ou non à distance du boîtier. L'élément vibreur (3) est utilisé pour détecter l'absence ou la présence d'eau.

FIG. 2

EP 0 427 608 A1

# DISPOSITIF DESTINÉ À EMPÊCHER LE DÉPÔT D'IMPURETÉS À L'INTÉRIEUR D'APPAREILS NON ACCESSIBLES DIRECTEMENT.

L'invention concerne un dispositif destiné à empêcher le dépôt d'impuretés, ou à décoller ces impuretés, à l'intérieur d'appareils non accessibles directement, notamment des pompes immergées au fond de forages, comportant des moyens pour produire des ultrasons.

L'immersion d'un appareil dans l'eau entraîne, à plus ou moins longue échéance selon la nature de celle-ci, un encrassement de l'appareil par dépôt de sels minéraux, produits ferrugineux, calcaire etc... qu'elle contient. Lorsqu'il s'agit d'une pompe, il y a encrassement de l'intérieur et le fonctionnement de la pompe est d'abord perturbé, puis tout bonnement empêché. Il est donc nécessaire d'éliminer ces dépôts indésirables. De plus, la pompe devant travailler immergée, il ne faut pas qu'elle se désamorce et tourne dans l'air, ce qui entraînerait son échauffement et sa détérioration. Il faut donc également s'assurer qu'elle baigne bien dans l'eau, ou le liquide pompé et l'arrêter dès qu'elle risque de ne plus être immergée.

Pour le nettoyage, on utilise communément des moyens chimiques ou mécaniques, nécessitant dans tous les cas une immobilisation de l'appareil et l'emploi d'une main d'oeuvre importante pour récupérer l'appareil immergé, le démonter, le nettoyer, le remonter et le remettre en place. Or cela provoque d'énormes difficultés dans le cas de pompes disposées dans des forages destinés aux installations de pompes à chaleur. De tels forages ont souvent une profondeur de plus de 40 mètres pour un diamètre de l'ordre de 115 mm. Le problème est le même lorsque l'on exploite des forages géothermiques.

Les pompes du type précité ont un équipage mobile constitué par un empilement de turbines calées sur un arbre d'entraînement. Le plus souvent, chaque turbine est formée d'un aubage de faible épaisseur, maintenu entre deux flasques circulaires. Ces pompes fonctionnent en régime laminaire et lorsque le milieu est chargé de matières en suspension, tel le calcaire et l'oxyde de fer, il se produit un colmatage des aubages qui entraîne en quelques mois, voire quelques semaines, une chute de débit de la pompe, cette chute s'accentuant jusqu'au colmatage total. Ce phénomène d'encrassement rapide s'applique également à d'autres appareils que les pompes immergées connues, notamment aux électrovannes montées sur des conduites qui véhiculent des liquides chargés. Dans tous ces cas il vaut mieux éviter la manipulation.

Il est donc avantageux de pouvoir procéder au nettoyage, ou au détartrage, de l'appareil, sur site, c'est-à-dire de pouvoir supprimer les phases d'immobilisation, de sortie, de démontage, de remontage, de remise en place et de remise en marche de tels appareils. Il est encore plus avantageux de pouvoir empêcher l'encrassement ou l'entartrage.

A cet effet, il existe bien dans le commerce des émetteurs d'ultrasons destinés au nettoyage de cuves ou de bacs. Mais leur emploi n'est pas possible dans les cas précités car d'une part, le diamètre des pompes n'est que légèrement inférieur à celui du forage, ce qui interdit la disposition de ces émetteurs volumineux à côté de la pompe et, d'autre part, ces dispositifs ne peuvent travailler qu'en atmosphère et ne pourraient donc pas être immergés même si la place était disponible.

Un premier but de l'invention est donc de permettre le nettoyage de tels appareils, notamment d'un appareil immergé, sans immobilisation ni manipulation de celui-ci, et dans la mesure du possible d'empêcher son encrassement.

De plus, la surveillance du niveau de l'eau dans un forage, surveillance obligatoire pour éviter une détérioration de l'appareil immergé (par échauffement par exemple), nécessite un dispositif à cet effet, qui doit également être descendu jusqu'à à peu près le niveau de l'appareil immergé, et doit aussi être nettoyé, ce qui, vue l'étroitesse du forage, pose un problème supplémentaire, quant à sa mise en place et également quant à son nettoyage périodique.

Un autre but de l'invention est donc de procurer un dispositif permettant, outre le nettoyage de l'appareil immergé, la détection d'un manque d'eau, afin de commander l'arrêt de l'appareil, dispositif qui n'augmente pas le volume de l'ensemble et qui ne nécessite pas non plus d'être remonté pour être nettoyé.

Ces objectifs sont atteints selon l'invention, en ce que d'une part, le dispositif est constitué d'un boîtier étanche pouvant être appliqué, de préférence de façon amovible, contre la paroi de l'appareil en épousant tout ou partie de sa forme, dans lequel est monté au moins un élément vibreur constitué de préférence par une pastille céramique à effet piézo-électrique et qui est relié à un oscillateur, lequel comporte des moyens d'excitation sélective de l'élément vibreur et peut être situé à distance du boîtier.

Selon l'invention, l'élément vibreur ultrasonique est solidarisé par une de ses faces à la paroi du boîtier adjacente à la paroi de l'appareil associé.

Selon une réalisation préférentielle de l'invention, il est constitué par une pastille céramique solidarisée à la paroi du boîtier étanche, par l'intermédiaire d'un interface de solidarisation constitué par une feuille de résine époxy ayant une face électriquement conductrice et une face diélectrique à haut pouvoir isolant, la pastille céramique étant solidarisée, de préférence par collage, à la face conductrice de l'interface, dont la face diélectrique est solidarisée à la paroi du boîtier contenant le vibreur ultrasonique.

La paroi du boîtier en contact avec le boîtier de l'appareil à entretenir peut être plane et tangente audit boîtier ou concave et épouser parfaitement la forme de la paroi de l'appareil à entretenir.

Le boîtier peut contenir plusieurs éléments vibreurs montés en parallèle sur la paroi adjacente à l'appareil à protéger.

Selon une caractéristique de l'invention, le dispositif comporte des moyens pour détecter le niveau de liquide dans le forage dans lequel l'ensemble est immergé.

Ces moyens peuvent être constitués par un analyseur de fréquence qui, pour une fréquence de vibration donnée du vibreur, provoque la coupure de l'alimentation de l'appareil à surveiller et la mise en veilleuse de l'oscillateur.

Ils peuvent aussi être constitués par une thermistance dont la valeur correspondant à une température donnée de l'ensemble est utilisée pour couper l'alimentation de l'appareil à surveiller et la mise en veilleuse de l'oscillateur.

L'invention sera mieux comprise au moyen d'exemples de réalisation représentés sur le dessin annexé sur lequel on voit:

Figure 1 : une réalisation du dispositif selon l'invention appliqué à une pompe immergée ;

Figure 2 : une coupe du dispositif de la figure 1 ;

Figure 3 : une vue partielle de dessus avec la paroi supérieure du boîtier enlevée ;

Figure 4 : un schéma du dispositif selon l'invention équipé pour la détection du manque d'eau ;

Figure 5 : un schéma du dispositif selon l'invention équipé pour la détection du manque d'eau selon une deuxième forme de réalisation.

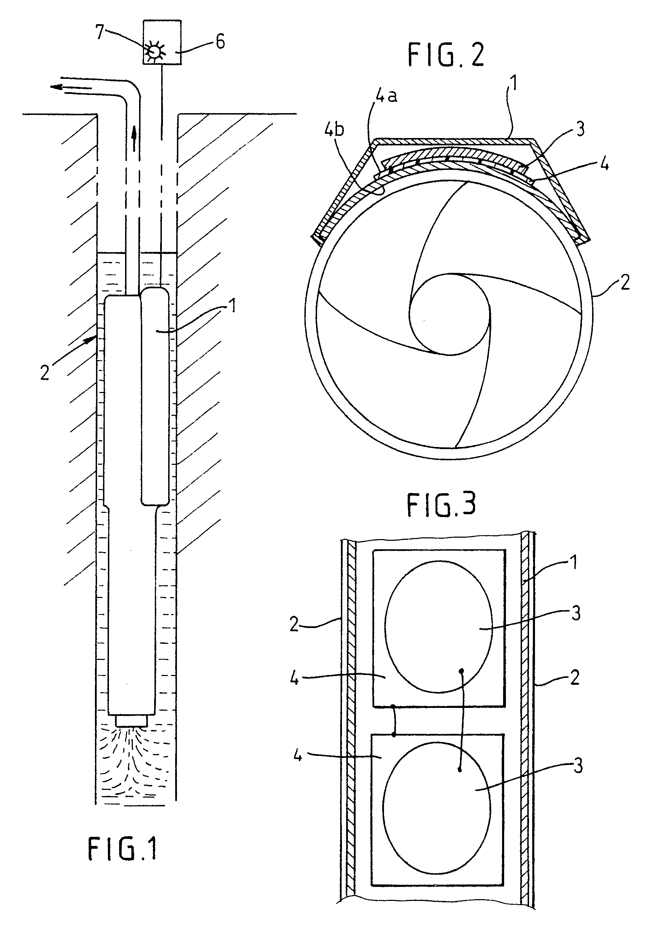

Sur la figure 1, on a figuré le dispositif selon l'invention par son boîtier étanche 1 qui est mis en place de façon amovible contre la paroi d'une pompe 2, de section circulaire, qui refoule vers un point d'utilisation le liquide dans lequel elle est plongée. Le boîtier 1 épouse en partie la forme de la paroi de la pompe contre laquelle il est plaqué.

Comme on le voit sur la figure 2, le boîtier étanche 1 est en acier inoxydable et a une forme générale trapézoïdale dont la grande base est réalisée par une paroi 5 concave dont le rayon de courbure est à peu près équivalent à celui de la pompe. Le dispositif comporte, au moins un vibreur ultrasonique 3, situé dans le boîtier 1, constitué, dans l'exemple représenté, par une pastille céramique à effet piézo-électrique. Toujours dans l'exemple représenté, cette pastille 3 est solidarisée à la paroi 5 du boîtier étanche 1 par un interface réalisé sous forme d'une feuille de résine époxy 4 dont la face supérieur 4a est électriquement conductrice et la face inférieure 4b est un diélectrique à fort pouvoir isolant. La pastille 3 est solidarisée à la face 4a de l'interface 4 tandis que l'interface est relié à la paroi 5 du boîtier 1, de préférence par collage. Comme on peut le voir sur la figure 3, plusieurs pastilles 3 peuvent être disposées dans le boîtier étanche 1 par l'intermédiaire d'autant d'interfaces et reliées électriquement entre elles en parallèle.

Le dispositif selon l'invention comporte un oscillateur 6. L'oscillateur 6 est pourvu de moyens d'excitation sélectives 7 agencés pour fournir une alimentation de faible intensité aux vibreurs ultrasoniques 3. Avantageusement, ces moyens sont combinés à un séquenceur pour fournir une alimentation continue ou discontinue périodique sous forme de trains d'ondes à intermittence et fréquence réglable. L'oscillateur est, dans l'exemple, situé à distance hors du forage et est relié aux vibreurs 3 situés dans le boîtier 1 par un câble.

La pompe étant plongée dans le forage, équipée du boîtier contenant le dispositif selon l'invention, le nettoyage, c'est-à-dire le détartrage ou la désagrégation d'autres dépôts apportés par l'eau, s'effectue de façon cyclique, par exemple pendant 1 seconde toutes les 10 secondes. Le cycle, la durée et la fréquence de vibrations choisis sont bien sûr fonction des conditions locales. De cette manière on assure la propreté de l'appareil immergé, et donc son bon fonctionnement, non seulement en le nettoyant mais aussi en empêchant en permanence l'encrassement.

Le second problème résolu par l'invention est celui de la surveillance du niveau de liquide, d'eau dans l'exemple décrit, dans le forage, à la hauteur de l'appareil à protéger, c'est-à-dire la pompe.

Dans le cas d'un pompage dans la nappe phréatique, par exemple, il peut arriver que le niveau de l'eau dans le forage baisse jusqu'à mettre la pompe, jusque là immergée, à l'atmosphère. Si aucun système n'est prévu pour surveiller en permanence ou périodiquement le niveau, la pompe va tourner à vide et risque donc de s'emballer et de s'échauffer, d'autant plus qu'elle n'est pas refroidie par l'eau dans laquelle elle est normalement plongée.

Les systèmes prévus à cet effet ne donnent pas satisfaction car ils utilisent des capteurs situés à des niveaux différents dans le forage. Au bout d'un certain temps les capteurs sont recouverts d'impuretés qui diminuent leurs caractéristiques électriques ; il faut donc, pour les remplacer ou les nettoyer, arrêter l'installation, ce que la présente invention cherche justement à éviter.

Selon une première forme de réalisation de l'invention, on utilise le fait que lorsque la pompe, ou l'appareil à surveiller, est hors de l'eau, le boîtier 1 du dispositif de l'invention qui s'y trouve aussi, n'a plus ses vibrations amorties par le liquide ambiant. La différence $f_1 - f_0$ entre la fréquence prescrite $f_0$ et la fréquence mesurée $f_1$ est établie.

Pour d'une certaine valeur $\Delta f$ de cette différence, l'appareil est hors d'eau ou presque. Il faut donc arrêter le fonctionnement de celui-ci afin qu'il ne se détériore pas, et en outre, dans le cas d'une pompe, qu'elle ne se désamorce pas en pompant tout le liquide restant dans le forage à ce moment là.

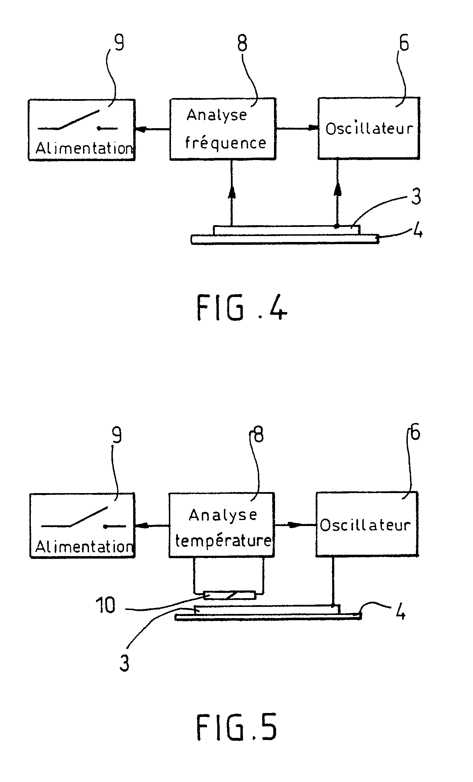

On a représenté sur la figure 4 un schéma théorique du dispositif selon l'invention, équipé pour détecter le manque d'eau.

L'oscillateur 6 envoie ses impulsions de commande au vibreur 3 et à un analyseur de fréquence 8. L'analyseur de fréquence 8 détecte la fréquence de vibration du vibreur 3 auquel il est relié. Il comporte un circuit soustracteur qui génère un signal représentatif de la différence entre la fréquence $f_1$ détectée sur le vibreur 3 et la valeur $f_0$ prescrite. Ce signal est traité par un second circuit de l'analyseur 8 qui émet à son tour un signal de sortie lorsque la différence calculée entre la fréquence $f_0$ prescrite et celle $f_1$ détectée sur le vibreur 3 atteint ou dépasse une valeur $\Delta f$ prescrite. Ce signal commande d'un côté la coupure de l'alimentation 9 de l'appareil et d'un autre côté est envoyé à l'oscillateur 6 pour couper ou réduire son activité.

Selon une autre forme de réalisation de l'invention, on utilise le fait que, le niveau baissant, non seulement la fréquence du vibreur augmente mais également sa température puisqu'il n'est plus refroidi par le liquide ambiant. De plus la température de l'appareil, fonctionnant plus près de la surface, s'élève également. La mesure ou la détection du gradient de température peut donc aussi être utilisée pour commander l'alimentation de l'appareil et contrôler le générateur.

On a représenté sur la figure 5 un schéma théorique d'une seconde forme de réalisation du dispositif selon l'invention, équipé pour détecter le manque d'eau.

L'oscillateur 6 est relié au vibreur 3 et à un circuit de commande de l'alimentation de l'appareil $8'$. Le circuit de commande $8'$ comporte une thermistance 10 disposée au-dessus du vibreur à très faible distance et est relié à l'oscillateur 6.

La valeur $R_1$ de la thermistance 10 correspond à une valeur $\theta_1$ de la température. Lorsque la valeur $R_1$ atteint ou dépasse une certaine valeur $R_0$ prescrite, l'alimentation 9 de l'appareil est coupée et un signal est envoyé à l'oscillateur 6 pour couper ou réduire son activité.

Dans les deux cas, analyse de fréquence ou mesure de température, lorsque l'alimentation est coupée et que l'oscillateur 6 est ralenti ou également arrêté, le système est en état de veille et l'oscillateur n'envoie ses impulsions que quelques secondes toutes les heures par exemple, pour vérifier si, la fréquence et/ou la température étant redescendues, l'eau est remontée au-dessus de l'appareil. Dans ce cas la pompe est remise en route et l'oscillateur reprend son fonctionnement au rythme prévu, par exemple une seconde toutes les dix secondes.

Il va de soi que l'invention n'est pas limitée à l'exemple décrit et que l'on peut y apporter des modifications jugées nécessaires sans sortir de son cadre.

Ainsi, le boîtier peut avoir une paroi 5 et des pastilles 4 planes, le boîtier étant appliqué tangentiellement au corps de pompe.

De même l'oscillateur 6 et les moyens d'excitation 7 peuvent être inclus dans le boîtier après réglage, ce qui économise un câble.

En outre l'analyseur de fréquence peut ne pas effectuer la différence entre les fréquences $f_1$ et $f_0$ mais simplement utiliser la fréquence $f_1$ pour commander le circuit d'alimentation avec commutation pour une valeur $f_1$ donnée.

## Revendications

1. Dispositif destiné à empêcher le dépôt d'impuretés, ou à décoller ces impuretés, à l'intérieur d'appareils non accessibles directement, notamment des pompes immergées au fond de forages, comportant des moyens pour produire des ultrasons, caractérisé en ce qu'il est constitué d'un boîtier étanche (1) pouvant être appliqué, de préférence de façon amovible, contre la paroi de l'appareil (2) en épousant tout ou partie de sa forme, dans lequel est monté au moins un élément vibreur (3) constitué de préférence par une pastille céramique à effet piézo-électrique et qui est relié à un oscillateur (6), lequel comporte des moyens d'excitation sélective de l'élément vibreur (7) et peut être situé à distance du boîtier.

2. Dispositif selon la revendication 1, caractérisé en ce que l'élément vibreur ultrasonique (3) est solidarisé par une de ses faces à la paroi (5) du boîtier (1) adjacente à la paroi de l'appareil associé (2).

3. Dispositif selon la revendication 1 et 2, caractérisé en ce que le vibreur ultrasonique est constitué par une pastille céramique (3) solidarisée à la paroi du boîtier étanche (1), par l'intermédiaire d'un interface de solidarisation (4) constitué par une feuille de résine époxy ayant une face (4a) électriquement conductrice et une face diélectrique (4b) à haut pouvoir isolant, la pastille céramique (3) étant solidarisée, de préférence par collage, à la face conductrice (4a) de l'interface (4), dont la face diélectrique (4b) est solidarisée à la paroi (5) du boîtier (1) contenant le vibreur ultrasonique.

4. Dispositif selon l'une des revendications 1 à 3, caractérisé en ce que la paroi (5) du boîtier (1) en contact avec le boîtier de l'appareil (2) à entretenir est plane et tangente audit boîtier.

5. Dispositif selon l'une des revendications 1 à 3, caractérisé en ce que la paroi (5) du boîtier (1) est concave et épouse parfaitement celle de l'appareil (2) à entretenir.

6. Dispositif selon l'une des revendications précédentes, caractérisé en ce que le boîtier (1) contient plusieurs éléments vibreurs montés en parallèle sur la paroi (5) adjacente à l'appareil (2) à protéger.

7. Dispositif selon l'une des revendications précédentes, caractérisé en ce qu'il comporte des moyens (8,8') pour détecter le niveau de liquide dans le forage dans lequel l'ensemble est immergé.

8. Dispositif selon la revendication 7, caractérisé en ce que les moyens pour détecter le niveau de liquide dans le forage sont constitués par un analyseur de fréquence (8) qui, pour une fréquence de vibration donnée du vibreur (3), provoque la coupure de l'alimentation de l'appareil à surveiller et la mise en veilleuse de l'oscillateur (6).

9. Dispositif selon la revendication 7, caractérisé en ce que les moyens pour détecter le niveau de liquide dans le forage sont constitués par une thermistance (10) dont la valeur correspondant à une température donnée de l'ensemble est utilisée pour couper l'alimentation de l'appareil à surveiller et la mise en veilleuse de l'oscillateur.

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 165 330  (D'ARCY)<br>* Page 2, ligne 66 - page 3, ligne 40; figure 2 * | 1,4,5,6 ,7,8,9 | B 08 B    3/12<br>F 04 C   13/00<br>F 04 D    7/00 |
| A | --- | 2 | |
| Y | PATENT ABSTRACTS OF JAPAN, vol. 9, no. 205 (C-299)[1928], 22 août 1985, page 68 C 299; & JP-A-60 71 694 (BABCOCK HITACHI K.K.) 23-04-1985 | 1 | |
| Y | EP-A-0 222 949  (LEE)<br>* Page 6, lignes 19-34; figures 1-4 * | 4,6 | |
| Y | US-A-3 175 567  (CRAWFORD)<br>* Colonne 2, ligne 51 - colonne 3, ligne 13; figures 1-4 * | 5 | |
| A | --- | 1,2 | |
| Y | FR-A-2 337 593  (SUBTIL-CREPIEUX)<br>* Page 4, lignes 3-17; figures 1-2 * | 7 | |
| Y | DE-A-3 118 502  (KOLLER)<br>* Abrégé * | 8 | |
| Y | FR-A-2 503 871  (DULIEU)<br>* Pages 1-4; figures 1-2 * | 9 | |
| A | DE-A-3 122 435  (CUENOUD)<br>* Abrégé * | 9 | |

DOMAINES TECHNIQUES
RECHERCHES (Int. Cl.5)

B 08 B
F 04 C
F 04 D

Le présent rapport a été établi pour toutes les revendications

| Lieu de la recherche | Date d'achèvement de la recherche | Examinateur |
|---|---|---|
| LA HAYE | 12-02-1991 | VOLLERING J.P.G. |